(19) Europäisches Patentamt
European Patent Office
Office européen des brevets

(11) Veröffentlichungsnummer : **0 038 009**
**B1**

(12) # EUROPÄISCHE PATENTSCHRIFT

(45) Veröffentlichungstag der Patentschrift : **21.11.85**

(51) Int. Cl.[4] : **C 08 G 65/32**, C 08 F 8/12, C 08 F 16/06

(21) Anmeldenummer : **81102599.8**

(22) Anmeldetag : **07.04.81**

(54) **Verfahren zur Herstellung von hydroxylgruppenhaltigen Polymeren.**

(30) Priorität : **11.04.80 DE 3013927**

(43) Veröffentlichungstag der Anmeldung : **21.10.81 Patentblatt 81/42**

(45) Bekanntmachung des Hinweises auf die Patenterteilung : **21.11.85 Patentblatt 85/47**

(84) Benannte Vertragsstaaten : **BE DE FR GB**

(56) Entgegenhaltungen :
**DE-A- 2 709 280**
**GB-A- 1 468 793**
**ULLMANNS ENCYKLOPÄDIE DER TECHNISCHEN CHEMIE 4. Auflage, Band 16 1978, VERLAG CHEMIE, Weinheim, New York, Seite 629**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Mueller, Herbert, Dr.**
**Carostrasse 53**
**D-6710 Frankenthal (DE)**
Erfinder : **Huchler, Otto Hermann, Dr.**
**Weinbietstrasse 38**
**D-6703 Limburgerhof (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 038 009 B1

Jouve, 18, rue St-Denis, 75001 Paris, France

**Beschreibung**

Die vorliegende Erfindung betrifft ein Verfahren zur Herstellung von hydroxylgruppenhaltigen Polymeren, insbesondere die Herstellung von Polytetrahydrofuran mit endständigen Hydroxyllgruppen, aus entsprechenden acyloxygruppenhaltigen Polymeren durch Umesterung mit Alkoholen in Gegenwart von Calciumoxid oder -hydroxid als Umesterungskatalysator und gegebenenfalls Wasser.

Polytetrahydrofuran (PTHF) wird üblicherweise unter Verwendung kationischer Katalysatorsysteme aus Tetrahydrofuran hergestellt, wobei ein Polytetramethylenether mit vom Initiatorsystem und Reaktionsmedium bestimmten, verschiedenen Endgruppen erhalten wird. PTHF weist daher die allgemeine Formel

$$X—[(CH_2)_4—O]_n—(CH_2)_4—Y$$

auf, in der n eine ganze Zahl von 1 bis ungefähr 100 bedeutet, die das Molekulargewicht charakterisiert und X und Y beispielsweise für folgende Reste stehen können :

| Initiatorsystem | X | Y |
|---|---|---|
| $R_3O^+/ML_m^-$<br>$ML_m$ = $BF_4$, $SbCl_6$, $FeCl_4$, $AlCl_4$ | RO | OH, F oder Cl |
| $FSO_3H$ | $FSO_3$ | OH |
| $AlCl_3/CH_3COCl$ | $CH_3COO$ | Cl |
| $HClO_4/(CH_3CO)_2O$ | $CH_3COO$ | $CH_3COO$ |
| $SbCl_5/(CH_3CO)_2O$ | $CH_3COO$ | $CH_3COO$ |

Das Haupteinsatzgebiet des PTHF, die Polyurethanchemie, erfordert Polyether, bei denen die Endgruppen X und Y Hydroxylgruppen sind. Die Endgruppen im primär erhaltenen Polymer müssen daher durch geeignete Maßnahmen in Alkoholfunktionen umgewandelt werden. Die bislang bekannt gewordenen Methoden verwenden hierzu meist die alkalische Verseifung mit z. B. wäßrigen Lösungen von Natriumhydroxid, Kalkmilch, Soda oder Ammoniak. Ein solches Verfahren, das den gegenwärtigen Stand der Technik wiedergibt, ist z. B. in der US-Patenschrift 3 358 042 beschrieben. Hier werden die schwierigen verfahrenstechnischen Probleme, die die Verseifungsreaktion makromolekularer Stoffe mit sich bringt, dadurch überwunden, daß sie in speziellen Lösungsmitteln ausgeführt wird. Dies wiederum verursacht insofern eine Komponente der Unwirtschaftlichkeit für das Verfahren, als ein zusätzlicher Lösungsmittelkreislauf einzurichten ist und insgesamt — wie in diesem US-Patent beschrieben — 7 getrennte Operationsschritte nach der Polymerisation durchzuführen sind. Darüber hinaus ist das Verfahren wenig umweltfreundlich, weil es mit einer erheblichen Salzfracht belastet ist und je nach dem Molekulargewicht des hergestellten PTHF 10 bis 35 % bezogen auf Polymerisat Salzfracht (NaF und $Na_2SO_4$) zu beseitigen sind.

Die durch alkalische Katalysatoren initiierte Verseifung ist für Acyloxygruppen enthaltende Polymere wenig geeignet, weil es dabei oftmals zur Bildung schwer zu brechender Emulsionen mit starker Schaumneigung kommt, so daß sich Katalysatoren und Wasser nur schwer abtrennen lassen. Häufig entstehen dabei auch gefärbte Umsetzungsprodukte.

Die durch alkalische Katalysatoren initiierte Umesterung der acyloxygruppenenthaltenden Polymeren mit niederen Alkoholen bietet ebenfalls bei der technischen Durchführung erhebliche Schwierigkeiten. Einmal besteht die Gefahr, gelblich bis braun verfärbte Produkte zu erhalten und zweitens müssen erhebliche Katalysatormengen eingesetzt werden, um eine vollständige Umesterung zu erreichen. Für die Umesterung von Polytetrahydrofuran mit Methanol in Gegenwart des wirksamsten Umesterungskatalysator Natriummethylat müssen mindestens 1 000 bis 10 000 Gew.-ppm des Alkoholates verwendet werden, um ein Produkt mit einer Restverseifungszahl kleiner als 1 zu erhalten. Der Katalysator muß nach durchgeführter Umesterung aus dem Produkt z. B. durch Waschen mit Wasser entfernt werden. Deshalb entstehen außer den relativ hohen Katalysatorkosten zusätzliche ökonomisch nicht zu vernachlässigende Aufarbeitungskosten.

In der DE-A-27 09 280 wird die Umesterung von Esterendgruppen aufweisenden Poly-(tetramethylenether)-glykolen mit einem Alkanol mit 1 bis 4 Kohlenstoffatomen in Gegenwart eines Oxids, Hydroxids oder Alkoxids von Calcium, Strontium, Barium oder Magnesium als Katalysator bei einem pH-Wert von 7 oder darüber beschrieben. Als Umesterungskatalysator bevorzugt verwendet wird pulverförmiges Calciumoxid in Mengen von 0,1 bis 5 Gew.-%, bezogen auf das Umesterungsgemisch. Nachteilig an dem

genannten Verfahren ist die Handhabung der hohen Katalysatorkonzentrationen sowie die zeitaufwendige, kostspielige Abtrennung und Entsorgung der gebrauchten Umesterungskatalysatoren.

Nach Angaben der DE-OS 24 45 962 und DE-OS 24 45 960 können acyloxygruppenhaltige polymere Stoffe in einer wässerigen Salzlösung, gegebenenfalls in Gegenwart eines in Wasser nicht oder nur begrenzt löslichen Alkohols, verseift werden, die als Verseifungskatalysator mindestens eine Säure oder einen in wäßrigem Medium säurebildenden Stoff enthält. In der DE-OS 24 45 959 wird ferner ein Verfahren zur Umesterung von acyloxygruppenhaltigen polymeren Stoffen in einem Gemisch aus Wasser und Alkohol in Gegenwart von Halogenwasserstoff als Katalysator beschrieben. Nach beiden Methoden können hydroxylgruppenhaltige polymere Stoffe in beachtlichen Ausbeuten erhalten werden, obwohl auch diese Verfahren gewisse Nachteile aufweisen. Nachteilig ist beispielsweise, daß die als Umesterungskatalysatoren eingesetzten, starken anorganischen Säuren nach durchgeführter Reaktion aus dem Polymeren durch Waschen mit Wasser entfernt werden müssen. Dies führt zu den bereits oben erwähnten Schwierigkeiten durch Bildung schwer zu brechender Emulsionen mit starker Schaumneigung. Außerdem verursacht auch die saure Katalyse, beispielsweise bei Verwendung von sauren wässerigen Salzlösungen als Reaktionsmedium, in gewissem Umfange eine Umweltbelastung. Ferner können die Produkte nach der Umesterung eine mehr oder weniger große Zahl von Doppelbindungen im Molekül enthalten, die durch ungewollte Dehydratisierung unter Einwirkung des sauren Katalysators entstanden sind.

Die vorliegenden Erfindung lag die Aufgabe zugrunde, einen verfahrenstechnisch einfacheren und damit ökonomischeren sowie umweltfreundlicheren Prozeß zu entwickeln, dem die oben geschilderten Nachteile nicht anhaften und der sowohl für die Herstellung von PTHF mit Hydroxylendgruppen als auch für die Überführung anderer Acyloxy-Gruppen enthaltender Polymerer in Hydroxylgruppen enthaltende Polymere geeignet ist.

Es wurde gefunden, daß acyloxygruppenhaltige, vorzugsweise acetatgruppenhaltige Polymere in vorteilhafter Weise in solche mit Hydroxylgruppen überführt werden können, wenn sie in Gegenwart von geringen Mengen Calciumhydroxid oder Calciumoxid mit Alkoholen einer Umesterungsreaktion unterworden werden. Nach einer besonders vorteilhaften Ausgestaltung des erfindungsgemäßen Verfahrens wird die Umesterungsreaktion mit Calciumoxid oder -hydroxid in Gegenwart von geringen Mengen Wasser durchgeführt.

Gegenstand der vorliegenden Erfindung ist somit ein Verfahren zur Herstellung von hydroxylgruppenhaltigen Polymeren durch Umesterung von acyloxygruppenhaltigen Polymeren mit Alkoholen in Gegenwart von Calciumoxid oder Calciumhydroxid als Umesterungskatalysatoren und gegebenenfalls Wasser, das durch gekennzeichnet, ist, daß man die genannten Umesterungskatalysatoren in Mengen von 0,001 bis 0,05 Gew.-%, bezogen auf acyloxygruppenhaltige Polymere, verwendet.

Überraschenderweise zeigte sich, daß das in wäßrigen und organischen Medien schwer lösliche Calciumhydroxid oder -oxid in wesentlich geringerer Konzentration wirksam ist als die normalerweise als Katalysatoren bei Umesterungen verwendeten löslichen Alkoholate. Bereits mit 0,001 Gew.-% Calciumhydroxid gelingt es, estergruppentragende Polymere mit Methanol in kurzer Zeit und vollständig umzuestern.

Im Gegensatz zu den sonst üblicherweise verwendeten Alkali-Alkoholaten genügt es, zur vollständigen Abtrennung des Katalysators vom Polymerisat dieses beispielsweise über ein zellulosehaltiges Filter zu schicken, um den Calciumgehalt unter die Nachweisbarkeitsgrenze zu senken. Auf diesen unerwarteten, technisch aber bedeutsamen Vorteil des neuen Verfahrens sei besonders hingewiesen. Alkalihaltige Katalysatoren dagegen müssen für die Abtrennung durch Filtration zunächst stöchiometrisch in unlösliche anorganische Salze überführt oder mit Hilfe einer Wasserwäsche aus dem Polymerisat entfernt werden.

Eine wissenschaftlich stichhaltige Erklärung dafür, weshalb das schwächer basische und im organischen Medium praktisch unlösliche Calciumhydroxid in geringerer Konzentration wirksam wird als lösliches Alkalialkoholat, kann nicht gegeben werden. Jedenfalls steht der Befund im Widerspruch zur allgemeinen Lehrmeinung, nach der die Reaktion anionisch katalysiert wird, d. h. die Reaktionsgeschwindigkeit von der Anionenkonzentration abhängig ist.

Das erfindungsgemäße Verfahren ist für die Umwandlung von Polymeren geeignet, die organische Estergruppierungen vorzugsweise Acetatreste tragen.

Polymere, die sich für die erfindungsgemäße Umesterung eignen, sind neben dem in bekannter Weise hergestellten PTHF im allgemeinen solche, die sich von mit Carbonsäure veresterten Homo- und Copolymeren Alkoholen ableiten. Derartige Polymere werden üblicherweise durch Homo- oder Copolymerisation aus den entsprechenden Estergruppen tragenden Monomeren, wie z. B. Isopropenyl-, Allyl- oder Vinylacetat, durch z. B. radikalische Polymerisation erhalten. Desgleichen eignen sich Copolymere dieser Monomeren mit anderen olefinisch ungesättigten copolymerisierbaren Verbindungen, wie Olefinen, Vinylaromaten und/oder Vinylhalogeniden, z. B. Styrol, Butadien, Ethylen und Vinylchlorid für die erfindungsgemäße Umesterungsreaktion.

Die erfindungsgemäß verwendbaren Umesterungskatalysatoren Calciumoxid oder -hydroxid werden in Mengen von 0,001 bis 0,05 Gew.-%, vorzugsweise 0,001 bis 0,01 Gew.-% und insbesondere 0,001 bis 0,003 Gew.-%, bezogen auf acyloxygruppenhaltige Polymere eingesetzt. Größere Katalysatormengen erbringen keine zusätzlichen Vorteile. Das Calciumoxid oder -hydroxid wird in der üblichen technischen

Qualität, bevorzugt in pulverisierter Form angewendet.

Für die Umesterung eignen sich Alkohole mit 1 bis 10 Kohlenstoffatomen, vorzugsweise 1 bis 4 Kohlenstoffatomen. In Betracht kommen die üblichen geradkettigen und verzweigten Alkohole, bevorzugt monofunktionelle primäre und sekundäre Alkohole. Im einzelnen seien beispielhaft genannt: Propanol, n-Butanol, iso-Butanol und vorzugsweise Methanol und Ethanol. Verwendet werden können auch Alkoholmischungen.

Die Menge des für die erfindungsgemäße Umesterung benötigten Alkohols ist nach oben nicht begrenzt. Im allgemeinen bewährt hat sich ein 5- bis 30-facher, vorzugsweise 10 bis 20-facher molarer Alkoholüberschuß, bezogen auf die Acyloxygruppen im Polymeren. Grundsätzlich kommt man jedoch auch mit größeren oder kleineren Alkoholmengen aus.

Wie bereits dargelegt wurde, kann die erfindungsgemäße Umesterung in Abwesenheit von Wasser durchgeführt werden. Nach einer bevorzugten Ausführungsform wird jedoch in Gegenwart von Wasser umgeestert, wobei die Wassermengen im Umesterungsgemisch zweckmäßigerweise 0,01 bis 0,1 Gew.-%, vorzugsweise 0,02 bis 0,05 Gew.-% betragen. Durch das vorhandene Wasser wird der Katalysator überraschenderweise nicht — wie man hätte erwarten sollen — unter Bildung eines Calciumsalzes der organischen Carbonsäure, beispielsweise Calciumacetat, inaktiviert.

Die Durchführung der Umesterung erfolgt entsprechend der gebräuchlichen Arbeitsweise, bei der der gebildete leichter siedende Ester bzw. dessen Azeotrop mit dem Alkohol destillativ im Zuge seiner Entstehung entfernt wird.

Da man aus ökonomischen Gründen die Arbeitsweise unter Normaldruck bevorzugen wird, ist die Reaktionstemperatur durch den Siedepunkt des Alkohols im wesentlichen bestimmt. Bei den oben erwähnten bevorzugten Alkoholen liegt sie etwa zwischen 64 und 120 °C.

Der Polymerenanteil in der Reaktionsmischung kann in verhältnismäßig weiten Grenzen variieren, im allgemeinen liegt er zwischen 10 und 90, vorzugsweise zwischen 30 und 80 Gew.-%.

Die Umesterung kann kontinuierlich und diskontinuierlich ausgeführt werden. Bei beiden Ausführungsformen muß man durch Verwendung einer geeigneten Fraktionierkolonne dafür Sorge tragen, daß im wesentlichen nur der gebildete leichtsiedende Carbonsäureester aus der Reaktionsmischung abgetrennt wird. Nach vollständiger Umesterung wird der überschüssig angewendete Alkohol vom Polymeren nach allgemein bekannten Trennverfahren separiert. Beispielsweise kann man zunächst den Katalysator durch Filtration entfernen und dann den Alkohol abdestillieren oder auch umgekehrt verfahren, indem man zunächst den überschüssigen Alkohol abdestilliert und danach die Filtration ausführt.

Die erfindungsgemäß hergestellten hydroxylgruppenhaltigen Polymeren eignen sich beispielsweise als polyfunktionelle Alkohole für die Herstellung von Polyurethanen. Sie zeichnen sich u. a. durch eine sehr gute Hydrolysebeständigkeit aus. Die in den folgenden Beispielen genannten Teile oder Prozente sind Gewichtsteile bzw. Gewichtsprozente. Raumteile verhalten sich zu den Gewichtsteilen wie Liter zu Kilogramm.

## Beispiel 1

Eine Mischung aus 900 Teilen eines Ethylen-vinylacetat-Copolymerisates mit einem Molekulargewicht von ungefähr 2 000 und einem Vinylacetat-Anteil von etwa 30 %, 800 Teilen Methanol und 0,1 Teilen Calciumhydroxid werden unter Rühren zum Sieden erhitzt. In einer Fraktionierkolonne mit 20 theor. Böden werden die Dämpfe in das Methanol-methylacetatazeotrop am Kolonnenkopf und Methanol im Kolonnensumpf getrennt. Als Kopffraktion erhält man im Verlaufe von 6 Stunden die theor. zu erwartende Menge Methylacetat von ca. 230 Teilen zusammen mit den Methanolazeotropanteilen (54 °C, Methylacetatgehalt 81 %). Aus dem Sumpfprodukt wird das überschüssige Methanol zunächst bei Normaldruck, dann unter vermindertem Druck abdestilliert. Das im Rückstand verbleibende hydroxylgruppenhaltige Polymere wird durch Filtration über eine Seitz-Filterschicht, US-1/1250 vom verwendeten Katalysator getrennt. Im Polymeren sind, wie durch Atomabsorptionsspektroskopie nachgewiesen wird, weniger als 0,1 ppm Calcium enthalten.

## Beispiel 2

450 Teile Polytetrahydrofuran vom Molekulargewicht 2 000 und der Verseifungszahl 54, dessen Molekülenden Acetylgruppen tragen, werden mit 450 Teilen Methanol und 0,03 Teilen Calciumhydroxid vermischt und unter Rühren zum Sieden erhitzt. Für die Trennung des bei der Umesterung gebildeten Methylacetats wird die im Beispiel 1 beschriebene Fraktionierkolonne verwendet. Nach einer Laufzeit von 7 Stunden ist die gesamte Menge Methylacetat, die sich aus dem Polymeren bilden kann, abgetrennt. Nun wird das überschüssige Methanol unter Normaldruck und vermindertem Druck abdestilliert und das erhaltene hydroxylgruppenhaltige Polymere wie im Beispiel 1 angegeben vom Katalysator durch Filtration getrennt. Man erhält ein farbloses Polymeres mit einer Hydroxylzahl von 56 mg KOH/g. Die Restverseifungszahl beträgt weniger als 0,01 mg KOH/g. Die Hydrierjodzahl liegt bei 0.

Beispiele 3 bis 5

Man verfährt analog den Angaben von Beispiel 1, verwendet jedoch als Ausgangskomponenten Polytetramethylenetherglykoldiacetate mit verschiedenen Molekulargewichten und unterschiedlichen Alkoholen sowie Katalysatoren.

Die verwendeten Ausgangskomponenten und -mengen sowie die Kenndaten der erhaltenen Polytetramethylenetherglykole sind in der folgenden Tabelle zusammengefaßt.

(Siehe Tabelle Seite 6 f.)

| Bsp. | Polytetramethylenetherglykol-diacetat Molekulargewicht | Menge [kg] | Verseifungszahl [mg KOH/g] | Katalysator Art | Menge [kg] | Alkohol Art | Menge [kg] | Polytetramethylenetherglykol OH-Zahl [mgKOH/g] | Verseifungsz. [mgKOH/g] | Hydrierjodzahl [g/100g] |
|---|---|---|---|---|---|---|---|---|---|---|
| 3 | 2000 | 450 | 54 | CaO | 0,02 | Methanol mit 0,06 Gew.-% Wasser | 400 | 56 | 0 | 0 |
| 4 | 650 | 450 | 153 | $Ca(OH)_2$ | 0,03 | Äthanol mit 0,03 Gew.-% Wasser | 400 | 172 | < 0,005 | 0 |
| 5 | 1000 | 450 | 102 | $Ca(OH)_2$ | 0,02 | Methanol mit 0,03 Gew.-% Wasser | 450 | 113 | < 0,005 | 0 |

**Patentansprüche**

1. Verfahren zur Herstellung von hydroxylgruppenhaltigen Polymeren durch Umesterung von acyloxygruppenhaltigen Polymeren mit Alkoholen in Gegenwart von Calciumoxid oder Calciumhydroxid als Umesterungskatalysatoren und gegebenenfalls Wasser, dadurch gekennzeichnet, daß man die genannten Umesterungskatalysatoren in Mengen von 0,001 bis 0,05 Gew.-%, bezogen auf acyloxygruppenhaltige Polymere, verwendet.

2. Verfahren nach Anspruch 1, dadurch gekennzeichnet, daß man die Umesterung in Gegenwart von 0,01 bis 0,1 Gew.-% Wasser, bezogen auf das Umesterungsgemisch, durchführt.

3. Verfahren nach Anspruch 1, dadurch gekennzeichnet, daß als Alkohole geradkettige oder verzweigte, monofunktionelle primäre oder sekundäre Alkohole mit 1 bis 4 Kohlenstoffatomen im Alkylrest verwendet werden.

4. Verfahren nach Anspruch 1, dadurch gekennzeichnet, daß die Alkohole in einem 5- bis 30-fachen molaren Überschuß, bezogen auf Acyloxygruppen im Polymeren, verwendet werden.

**Claims**

1. A process for the preparation of a hydroxyl-containing polymer by trans-esterifying an acyloxycontaining polymer with an alcohol in the presence of calcium oxide or calcium hydroxide as trans-esterification catalyst and in the presence or absence of water, wherein the said trans-esterification catalyst is used in an amount of from 0.001 to 0.05 % by weight, based on the acyloxy-containing polymer.

2. A process as claimed in claim 1, wherein the trans-esterification is carried out in the presence of from 0.01 to 0.1 % by weight of water, based on the trans-esterification mixture.

3. A process as claimed in claim 1, wherein the alcohol used is a straight-chain or branched, monofunctional primary or secondary alcohol of 1 to 4 carbon atoms.

4. A process as claimed in claim 1, wherein the alcohol is used in 5-30-fold molar excess over the acyloxy groups in the polymer.

**Revendications**

1. Procédé de préparation de polymère à groupes hydroxyle, par réaction de polymères à groupes acyloxy avec des alcools, en présence d'oxyde de calcium ou hydroxyde de calcium comme catalyseurs de transestérification et éventuellement d'eau, caractérisé par le fait que l'on utilise les catalyseurs de transestérification indiqués en proportions de 0,001 à 0,05 % en poids, rapportées au polymère à groupe acyloxy.

2. Procédé selon la revendication 1, caractérisé par le fait que l'on effectue la transestérification en présence de 0,01 à 0,1 % en poids d'eau, rapportée au mélange de transestérification.

3. Procédé selon la revendication 1, caractérisé par le fait que l'on utilise, comme alcools, des alcools primaires ou secondaires, monofonctionnels, à chaîne droite ou ramifiée, et à 1 à 4 atomes de carbone dans le reste alkyle.

4. Procédé selon la revendication 1, caractérisé par le fait que l'on utilise les alcools en excès 5 à 30 fois molaire, rapporté aux groupes acyloxy dans les polymères.